# EUROPEAN PATENT APPLICATION

(11) **EP 3 242 224 A1**
(43) Date of publication of application: **08.11.2017**
(21) Application number: 15899456.6
(22) Date of filing: 18.11.2015
(51) Int. Cl.: G06F 17/30

(54) **QUESTION-ANSWER INFORMATION PROCESSING METHOD AND APPARATUS, STORAGE MEDIUM, AND DEVICE**

(30) Priority: 28.07.2015 CN 201510452114
(71) Applicant: Baidu Online Network Technology (Beijing) Co., Ltd, Beijing 100085 (CN)
(72) Inventor: YANG, Kai, Beijing 100190 (CN); HOU, Wen, Beijing 100190 (CN)
(74) Representative: Nederlandsch Octrooibureau
(86) International application number: PCT/CN2015/094881
(87) International publication number: WO 2017/016104

(57) **Abstract**

Embodiments of the present disclosure disclose a method and apparatus for processing question-and-answer information. The method comprises: obtaining a question type search sentence inputted by a user through a search box applied in a search engine (S110); serving the search sentence as a to-be-inquired question to initiate a question-and-answer request to a question-and-answer server (S120); receiving an answer corresponding to the to-be-inquired question and returned by the question-and-answer server (S130); and outputting the answer through a result display page corresponding to the search box (S140). The method and apparatus can optimize the existing question-and-answer mechanism, and simplify the process of asking and answering, which makes it more convenient for a user to ask and answer.

## Description

### CROSS-REFERENCE TO RELATED APPLICATION

This application is related to and claims the priority from Chinese Application No. 201510452114.4, filed by Baidu Online Network Technology (Beijing) Co., Ltd. as the applicant, on July 28, 2015, entitled "Method and Apparatus for Processing Question-and-Answer Information," the entire disclosure of which is hereby incorporated by reference.

### TECHNICAL FIELD

Embodiments of the present disclosure relate to the field of internet technology, and particularly to a method and apparatus for processing question-and-answer information, a storage medium and a device.

### BACKGROUND

At present, to solve various problems that one encounters in daily life, work and study, some internet based question answering systems (such as Baidu Knows, Zhihu and forums, etc.) emerge on this occasion. In the question answering systems, users may submit a question that they want to ask, and the question answering systems will find a corresponding answer by some means and feed it back to the users.

However, in the conventional techniques, the processes of asking and answering a question appear complex to the user, resulting in a poor user experience. The user usually needs to first find link information on a service page of the question answering system through a search engine, and access the service page based on the link information, to ask a question and receive an answer.

### SUMMARY

Embodiments of the present disclosure provide a method and apparatus for processing question-and-answer information, a storage medium and a device, to optimize the existing question-and-answer mechanism, and simplify processes of asking and answering a question, so that it will be convenient for users to ask and answer.

In a first aspect, the embodiments of the present disclosure provide a method for processing question-and-answer information, comprising:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.

In a second aspect, the embodiments of the present disclosure further provide an apparatus for processing question-and-answer information, comprising:
a question obtaining unit, configured to obtain a question type search sentence inputted by a user through a search box applied in a search engine;
a question-and-answer request initiating unit, configured to serve the search sentence obtained by the question type search sentence obtaining unit as a to-be-inquired question to initiate a question-and-answer request to a question-and-answer server;
an answer receiving unit, configured to receive an answer corresponding to the to-be-inquired question and returned by the question-and-answer server; and
an answer outputting unit, configured to output the answer through a result display page corresponding to the search box.

In a third aspect, the embodiments of the present disclosure provide a storage medium containing computer-executable instructions which, when executed by a computer processor, cause the computer processor to perform a method for processing question-and-answer information, the method comprising:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.

In a fourth aspect, the embodiments of the present disclosure provide a device, comprising:
one or more processors;
a memory; and
one or more programs stored in the memory and configured to, when executed by the one or more processors, cause the processors to perform the following operations:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.

With the technical solutions provided in the embodiments of the present disclosure, after obtaining a question type search sentence inputted by a user through a search box applied in a search engine, the search sentence will be automatically served as a to-be-inquired question, and a question-and-answer server will be invoked to obtain a corresponding answer and output the answer, so that the user can directly access the question answering system to find the corresponding answer by directly inputting the question type search sentence merely through conventional search operations provided by the search engine, thereby simplifying processes of asking and answering a question, which makes it very convenient for users to ask and answer.

### BRIEF DESCRIPTION OF THE DRAWINGS

Hereinafter, drawings used to describe the embodiments will be briefly introduced so as to explain the technical solutions in the embodiments of the present disclosure more clearly. Of course, the drawings described below only show some of the embodiments of the present disclosure. To those skilled in the art, the drawings may be modified and substituted without any inventive effort.
Fig. 1 is a schematic flowchart of a method for processing question-and-answer information according to a first embodiment of the present disclosure;
Fig. 2 is a schematic flowchart of a method for processing question-and-answer information according to a second embodiment of the present disclosure;
Fig. 3 is a schematic structural diagram of an apparatus for processing question-and-answer information according to a third embodiment of the present disclosure;
Fig. 4A illustrates signaling interaction of processing question-and-answer information by a system for processing question-and-answer information according to a fourth embodiment of the present disclosure;
Fig. 4B is a schematic diagram of a search page displayed on a search client according to the fourth embodiment of the present disclosure;
Fig. 4C is a schematic diagram of a voice acquisition indicating interface displayed on the search client according to the fourth embodiment of the present disclosure; and
Fig. 5 is a schematic diagram of a hardware structure of a device for executing a method for processing question-and-answer information according to a sixth embodiment of the present disclosure.

### DETAILED DESCRIPTION OF EMBODIMENTS

The technical solution provided by the embodiments of the present disclosure will be clearly and completely described below with reference to the accompanying drawings. Clearly, the described embodiments are some, rather than all of the embodiments of the present disclosure, and intended to illustrate the principles of the present disclosure, rather than limit the present disclosure to these specific embodiments. All other embodiments obtained by those skilled in the art, without creative effort and on the basis of the embodiments in the present disclosure, are within the scope of the present disclosure.

### First Embodiment

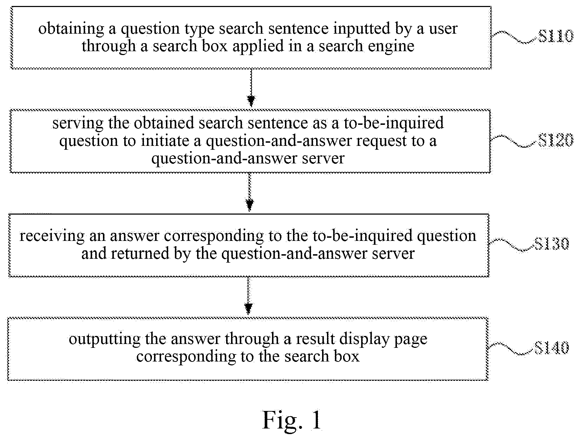

Fig. 1 is a schematic flowchart of a method for processing question-and-answer information according to a first embodiment of the present disclosure. The embodiment may be suitable for a network architecture comprising a search client (or a browser client) and a question-and-answer server. The search client or the browser client is integrated into a terminal, such as a smart phone, a tablet PC or a personal digital assistant, and cooperates with a search engine to provide search services for a terminal user. The question-and-answer server distinct from the search engine is a physical device for providing question-and-answer services for the terminal. The method of the embodiment may be performed by an apparatus for processing question-and-answer information which is implemented by software, and this apparatus may be set in the search client or the browser client. Referring to Fig. 1, the method for processing question-and-answer information provided in the embodiment specifically includes the following operations.
S110, obtaining a question type search sentence inputted by a user through a search box applied in a search engine.

As a specific implementation of the embodiment, the apparatus for processing question-and-answer information is set in the search client. After the search client is started, a search page provided with a search box will be displayed on the search client, and this search box is applied in the search engine. The search page is usually a page pre-stored locally, and also may be a page requested in real time by the search client from the search engine.

As another specific implementation of the embodiment, the apparatus for processing question-and-answer information is set in the browser client. After receiving a user triggered access instruction for the search page, the browser initiates an access request to the search engine according to the instruction, so as to locally load the search page provided with a search box to display. This search box is a search box applied in the search engine.

For example, the obtaining a question type search sentence inputted by a user through a search box, comprises: receiving the search sentence inputted by the user through the search box; and confirming a current obtained question type search sentence based on the received search sentence, if a type of the received search sentence is identified as a question type. Specifically, the received search sentence can be directly served as the currently obtained question type search sentence.

The mode of inputting the received search sentence may be a text input mode or a voice input mode. The search box applied in the search engine contains a text input area and/or a voice input icon. After an operation triggering the text input area is detected, an input method interface will be popped up, text contents inputted by the user through the input method interface will be received, and the text contents will be served as the search sentence inputted by the user through the search box. After an operation triggering the voice input icon is detected, a voice message entered by the user will be acquired, and the voice message will be served as the search sentence inputted by the user through the search box.

Since the search sentence inputted through the search box applied in the search engine may be contents of any type, such as the contents of inquiring questions, searching entities and downloading resources, not only the network traffic will be wasted (some search requirements are not to inquire questions to obtain answers, and therefore the search sentences of these search requirements are not needed to be transmitted to the question-and-answer server), but also the processing load of the question-and-answer server will increase, if the search sentence of any type is always served as a to-be-inquired question without discrimination, to be forwarded to a question-and-answer server to obtain an answer. Therefore, after the search sentence inputted by the user is received, the sentence needs to be identified firstly to confirm whether it is of the question type.

For example, the process for indentifying includes: analyzing the search sentence to find whether a question type keyword is contained therein; and confirming that the type of this search sentence is of the question type, if a question type keyword is contained in the search sentence. The question type keywords may be predefined by developers, which may includes one, two or more words. For instance, "I want to inquire" may be served as one of the question type keywords. If the received search sentence is the voice message acquired by a voice acquisition apparatus, the process for analyzing the voice message shall further comprise: converting this voice message to a corresponding text content, and then searching for the corresponding question type keyword based on the text content.

One skilled in the art should understand that an icon or an option specifically for inquiring questions may also be set in the search box. If an operation triggering the icon or the option is detected, it will be confirmed that the user has a current question-and-answer requirement, and the current received search sentence inputted in the search box by the user is a search sentence of question-and-answer type.
S120, serving the obtained search sentence as a to-be-inquired question to initiate a question-and-answer request to a question-and-answer server.
   For example, the step S120 includes: serving the search sentence as the to-be-inquired question, encapsulating the to-be-inquired question as the question-and-answer request according to a format specified by the question-and-answer server, and adding an address of the question-and-answer server as a destination address of the question-and-answer request; and initiating the question-and-answer request to the question-and-answer server.
S130, receiving an answer corresponding to the to-be-inquired question and returned by the question-and-answer server.
   The received answer is obtained by the question-and-answer server according to the question-and-answer request. For example, the answer may be obtained by the question-and-answer server from a terminal corresponding to an expert in the field of the to-be-inquired question or from an expert system. The expert has a large amount of professional knowledge and experience in the field. Thus, the answer for the to-be-inquired question provided from the expert will have a high accuracy, and may meet the question-and-answer requirement of the user well, so as to enhance the page view amount.
   It should be noted that the received answer may also be an answer in a target question-answer pair matching with the to-be-inquired question and queried by the question-and-answer server from a plurality of pre-stored question-answer pairs. Each of the question-answer pairs is consisted of a question and its corresponding answer. The target question-answer pair is a question-answer pair in the a plurality of question-answer pairs, whose question has a similarity degree with the to-be-inquired question in text or meaning exceeding a preset threshold.
S140, outputting the answer through a result display page corresponding to the search box.
   According to the technical solution provided in the embodiment, after obtaining a question type search sentence inputted by a user through a search box applied in a search engine, the search sentence will be automatically served as a to-be-inquired question, and a question-and-answer server will be invoked to obtain a corresponding answer and output the answer, so that the user can directly access the question-and-answer system to find the corresponding answer by directly inputting the question type search sentence merely through conventional search operations provided by the search engine, thereby simplifying processes of asking and answering a question, which makes it very convenient for users to ask and answer.

### Second Embodiment

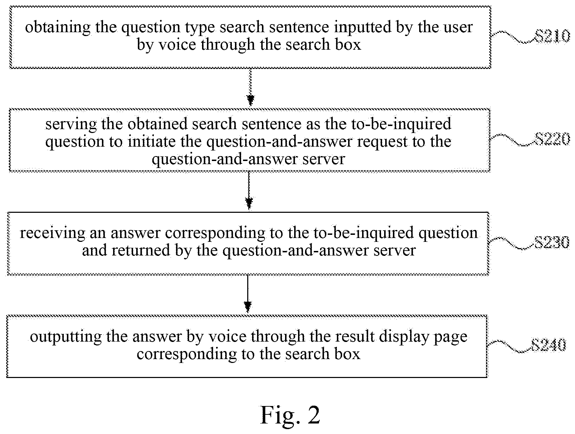

Fig. 2 is a schematic flowchart of a method for processing question-and-answer information according to a second embodiment of the present disclosure. On the basis of the first embodiment, this embodiment optimizes the input mode of the search sentence and the output mode of the answer, to further improve the convenience of inquiry and reply for the user. Referring to Fig. 2, the method for processing question-and-answer information provided in the embodiment specifically includes the following operations:
S210, obtaining the question type search sentence inputted by the user by voice through the search box.
   For example, the step S210 includes: invoking a voice acquisition apparatus to acquire a voice message entered by the user, after detecting an operation by the user triggering a voice acquisition icon in the search box; and serving the voice message as the obtained question type search sentence, if the voice message is identified as a question type voice message. It should be noted that, after the operation triggering the icon is detected, the voice acquisition apparatus can be immediately invoked to acquire the voice message entered by the user, or a prompt interface may be popped up firstly. The contents displayed on the interface may include: prompt content for voice input, such as "press to speak" with a microphone icon shown therebelow, and a plurality of hot search terms counted in a recent period (e.g., in one week). Preferably, the search terms in the prompt interface are updated every few seconds. After an operation touching the microphone icon in the interface occurs, the voice acquisition apparatus (e.g., the microphone) will be invoked to acquire the voice message entered by the user, and the voice message will be served as a search sentence in the voice form inputted by the user through the search box.
   After the search sentence in the voice form inputted by the user is acquired, the sentence will be firstly converted to a search sentence in the text form, and then the sentence will be analyzed to confirm whether it is of the question type. If the search sentence is of the question type, the acquired search sentence in the voice form or the converted search sentence in the text form will be served as the obtained question type search sentence. The conversion operation may be implemented locally by the apparatus for processing question-and-answer information based on a voice recognition technology, and may also be implemented by a voice conversion server invoked remotely by the apparatus for processing question-and-answer information.
   Being restricted by the voice recognition technology, when the voice message is converted to the text content, a phenomenon that several words are not converted correctly is inevitable, and even in some conversion results, the original meaning is misinterpreted seriously. Therefore, the question type search sentence is preferably the initial voice message entered by the user rather than the text content from conversion.
   In this embodiment, the number of the search sentences in the text form obtained by conversion may be one or more. Hence, these search sentences may be displayed for the user's selection of a best search sentence which can express the original meaning. This search sentence will be served as the current obtained question type search sentence.
S220, serving the obtained search sentence as a to-be-inquired question to initiate a question-and-answer request to a question-and-answer server.
S230, receiving an answer corresponding to the to-be-inquired question and returned by the question-and-answer server.
S240, outputting the answer by voice through the result display page corresponding to the search box.

In this embodiment, the received answer may be an answer in the voice form or text form. The outputting the answer by voice through the result display page corresponding to the search box comprises: invoking a voice play device through the result display page corresponding to the search box, and outputting the answer by voice. The voice play device may be a speaker. If the answer is in the text form, the step S240 further comprises, after the answer is converted into a voice message based on the voice recognition technology, outputting the voice message in the result display page corresponding to the search box.

According to the technical solution provided in the embodiment, the processing for question-and-answer information by voice can accelerate the speed of inquiry and reply, and simplify the process of asking and answering a question, and the forms of inputting a question and outputting an answer become diversified. The embodiment allows the user to submit questions in the voice input mode and receive answers in the voice form, so that it could be very convenient for the user who could not operate the keyboard (or handwriting), is inconvenient to operate the keyboard by hand (such as driving or cooking), or is blind, to use the question-and-answer server to find answers.

In some embodiments, in the situation where the search sentence is inputted in the voice form, the answer can be outputted in the text form. Similarly, in the situation where the search sentence is inputted in the text form, the answer can be outputted in the voice form. For example, this can be implemented through a user's control on a preset element.

### Third Embodiment

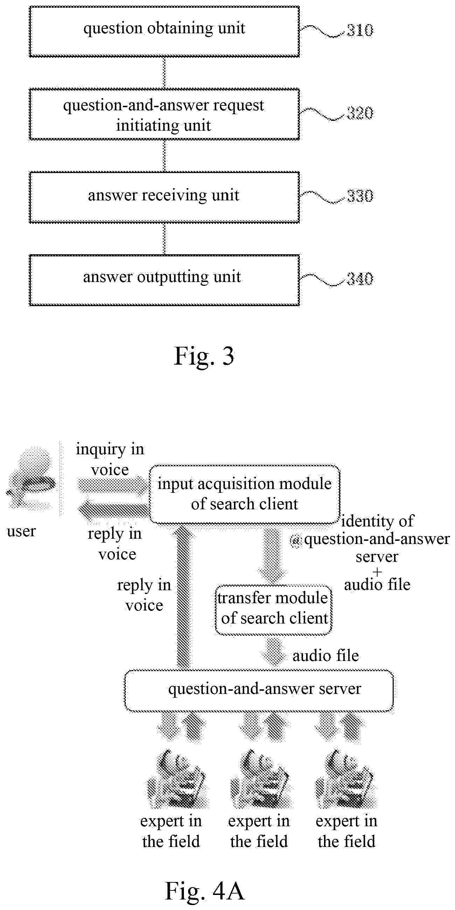

Fig. 3 is a schematic structural diagram of an apparatus for processing question-and-answer information according to a third embodiment of the present disclosure. Referring to Fig. 3, the apparatus specifically comprises: a question obtaining unit 310, configured to obtain a question type search sentence inputted by a user through a search box applied in a search engine; a question-and-answer request initiating unit 320, configured to serve the search sentence obtained by question obtaining unit 310 as a to-be-inquired question to initiate a question-and-answer request to a question-and-answer server; an answer receiving unit 330, configured to receive an answer corresponding to the to-be-inquired question and returned by the question-and-answer server; and an answer outputting unit 340, configured to output the answer through a result display page corresponding to the search box.

Preferably, the question-and-answer request initiating unit 320 is specifically configured to serve the search sentence as the to-be-inquired question, encapsulate the to-be-inquired question as the question-and-answer request according to a format specified by the question-and-answer server, and add an address of the question-and-answer server as a destination address of the question-and-answer request; and initiate the question-and-answer request to the question-and-answer server.

Preferably, the question obtaining unit 310 is specifically configured to receive the search sentence inputted by the user through the search box; and confirm a current obtained question type search sentence based on the received search sentence, if a type of the received search sentence is identified as a question type.

Preferably, the question obtaining unit 310 is specifically configured to obtain the question type search sentence inputted by the user by voice through the search box. For example, the question obtaining unit 310 is specifically configured to invoke a voice acquisition apparatus to acquire a voice message entered by the user, after detecting an operation by the user triggering a voice acquisition icon in the search box; and serve the voice message as the obtained question type search sentence, if the voice message is identified as a question type voice message.

Preferably, the answer outputting unit 340 is specifically configured to output the answer by voice through the result display page corresponding to the search box. For example, the answer outputting unit 340 is specifically configured to invoke a voice play device through the result display page corresponding to the search box, and output the answer by voice.

On the basis of the technical solution provided in the embodiment, the answer is obtained by the question-and-answer server from a terminal corresponding to an expert in a field of the to-be-inquired question.

Preferably, the apparatus for processing the question-and-answer information provided in the embodiment is configured in a search client. Alternatively, this apparatus may also be configured in a browser client.

The above product may perform the method for processing the question-and-answer information provided by any embodiment of the present disclosure, and possess functional modules for performing the method and corresponding beneficial effects.

### Fourth Embodiment

Fig. 4A illustrates the signaling interaction of processing question-and-answer information by a system for processing question-and-answer information according to a fourth embodiment of the present disclosure. On the basis of the above embodiments, this embodiment provides a preferable embodiment. In this embodiment, the system for processing question-and-answer information comprises: a search client, a question-and-answer server and an expert terminal. The search client is integrated in a terminal, such as a smart phone, a tablet PC or a personal digital assistant. Referring to Fig. 4A, the signaling interaction process of processing question-and-answer information is as below.

Firstly, the search client obtains a question type search sentence inputted by a user by voice through a search box, serves the obtained search sentence as a to-be-inquired question, and initiates a question-and-answer request to the question-and-answer server. This process is specifically as below.

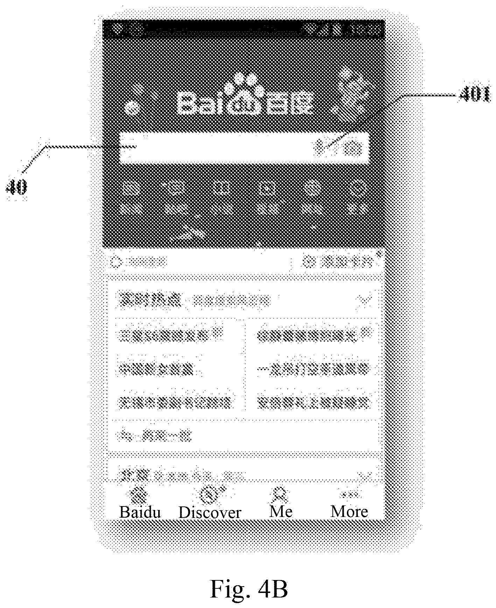

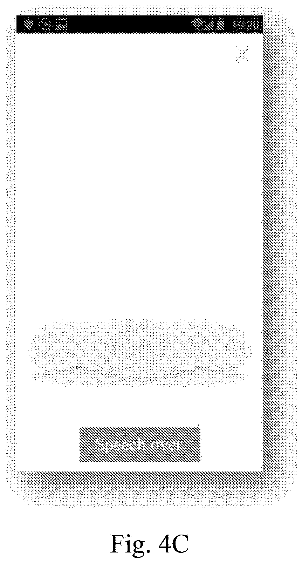

An input acquisition module of the search client detects an operation by the user to trigger a voice input icon 401 in a search box 40 on a search page (see Fig. 4B), then starts a microphone on the terminal, and simultaneously pops up a voice acquisition indicating interface (see Fig. 4C). The input acquisition module closes the microphone after receiving an operation touching a display content "speech over" in the voice acquisition indicating interface, and generates an audio file (i.e., an file including question type search sentences) from the question type voice message acquired by the microphone in a period between its opening and closing. The input acquisition module transmits the generated audio file to a transfer module of the search client together with an identity of the question-and-answer server.

After receiving the identity of the question-and-answer server, the transfer module of the search client serves the audio file simultaneously transmitted with the identity as the to-be-inquired question, encapsulates the to-be-inquired question as the question-and-answer request according to a format specified by the question-and-answer server, adds an address of the question-and-answer server as a destination address of the question-and-answer request, and initiates the question-and-answer request to the question-and-answer server. At this moment, the search client may directly send the question-and-answer request to the question-and-answer server without forwarding by a search engine. This question type search sentence may be sent to the question-and-answer server only, or may also be sent to both of the question-and-answer server and the search engine, so that the question's answer is queried and searched for at the same time.

Secondly, the question-and-answer server analyzes the question-and-answer request to extract the audio file, converts the audio file to the to-be-inquired question in the text form, identifies the field of this question, and initiates an answer-obtaining request including the audio file to terminals of a plurality of experts in the field.

Thirdly, the terminal of each expert generates a corresponding answer according to the answer-obtaining request, and returns the answer to the question-and-answer server.

Fourthly, the question-and-answer server returns the received answer to the search client. An answer outputting module of the search client outputs this answer by voice through a result display page corresponding to the search box.

The technical solution provided in this embodiment has a beneficial effect that, for the questioner, on the one hand, he only needs to input voice without editing the search sentence in the text form, which makes it more convenient to submit a question; on the other hand, the answer will be directly returned to the search client, so that the user need not query the answer by accessing a client page provided by the question-and-answer system, which ensures the promptness of obtaining an answer.

It should be noted that the transfer module of the search client in this embodiment may also exist independently of the search client, and it may be a data transfer center which can communicate data with the search client and the question-and-answer server.

### Fifth Embodiment

The embodiments of the present disclosure provide a storage medium containing computer-executable instructions which, when executed by a computer processor, cause the computer processor to perform a method for processing question-and-answer information, the method comprising:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.

When the storage medium performs the method, the serving the search sentence as a to-be-inquired question to initiate a question-and-answer request to a question-and-answer server may further comprise:
serving the search sentence as the to-be-inquired question, encapsulating the to-be-inquired question as the question-and-answer request according to a format specified by the question-and-answer server, and adding an address of the question-and-answer server as a destination address of the question-and-answer request; and
initiating the question-and-answer request to the question-and-answer server.

When the storage medium performs the method, the obtaining a question type search sentence inputted by a user through a search box may further comprise:
receiving the search sentence inputted by the user through the search box; and
confirming a current obtained question type search sentence based on the received search sentence, if a type of the received search sentence is identified as a question type.

When the storage medium performs the method, the obtaining a question type search sentence inputted by a user through a search box may further comprise:
obtaining the question type search sentence inputted by the user by voice through the search box.

When the storage medium performs the method, the obtaining the question type search sentence inputted by the user by voice through the search box may further comprise:
invoking a voice acquisition apparatus to acquire a voice message entered by the user, after detecting an operation by the user triggering a voice acquisition icon in the search box; and serving the voice message as the obtained question type search sentence, if the voice message is identified as a question type voice message.

When the storage medium performs the method, the outputting the answer through a result display page corresponding to the search box may further comprise:
outputting the answer by voice through the result display page corresponding to the search box.

When the storage medium performs the method, the outputting the answer by voice through the result display page corresponding to the search box may further comprise:
invoking a voice play device through the result display page corresponding to the search box, and outputting the answer by voice.

When the storage medium performs the method, the answer is obtained by the question-and-answer server from a terminal corresponding to an expert in a field of the to-be-inquired question.

### Sixth Embodiment

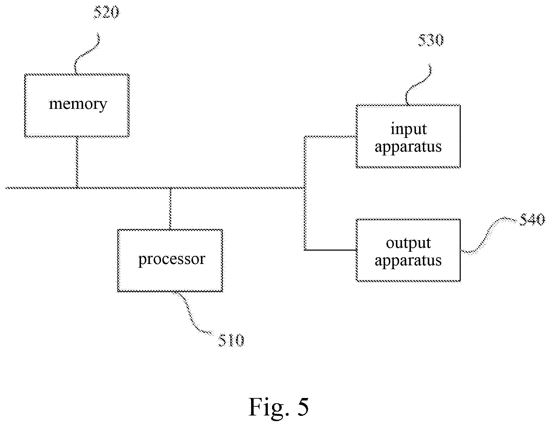

Fig. 5 is a schematic diagram of a hardware structure of a device for executing a method for processing question-and-answer information according to a sixth embodiment of the present disclosure. Referring to Fig. 5, the device comprises:
one or more processors 510 (for example, one processor 510 as shown in Fig. 5);
a memory 520; and one or more modules.

The device may further comprise: an input apparatus 530 and an output apparatus 540. The processors 510, the memory 520, the input apparatus 530 and the output apparatus 540 in the device may be connected via a bus or another approach. For example, Fig. 5 shows the connection via the bus.

The memory 520 as a computer readable storage medium can store a software program, a computer executable program and a module, such as the program instructions/modules corresponding to the method for processing question-and-answer information of the present disclosure (e.g. the question obtaining unit 310, the question-and-answer request initiating unit 320, the answer receiving unit 330 and the answer outputting unit 340 in the apparatus for processing question-and-answer information as shown in Fig. 3). The processor 510 executes various functions of the device and processes data by running the software program, computer executable program and module stored in the memory 520, so as to implement the method for processing question-and-answer information of the above embodiment.

The memory 520 may include a program storing region and a data storing region. The program storing region may store an operating system and an application required for at least one function. The data storing region may store data established for terminals' use, and the like. Moreover, the memory 520 may include a high speed random access memory, and may include a non-volatile memory, such as at least one disk storage device, flash memory device, and other non-volatile solid memory device. In some embodiments, the memory 520 may further include a memory disposed apart from the processor 510, which may be connected to a terminal device via a network. The network includes by not limited to the Internet, intranet, LAN, mobile communication network, and the combination thereof.

The input apparatus 530 may be configured to receive an input number or character message and generate a key signal input related to the terminal user settings and the function control. The output apparatus 540 may include a display device, such as a display screen.

The one or more modules are stored in the memory 520, and when executed by the one or more processors 510, cause the one or more processors 510 to perform the following operations:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.

Further, the serving the search sentence as a to-be-inquired question to initiate a question-and-answer request to a question-and-answer server may comprise:
serving the search sentence as the to-be-inquired question, encapsulating the to-be-inquired question as the question-and-answer request according to a format specified by the question-and-answer server, and adding an address of the question-and-answer server as a destination address of the question-and-answer request.

Further, the obtaining a question type search sentence inputted by a user through a search box may comprise:
receiving the search sentence inputted by the user through the search box; and
confirming a current obtained question type search sentence based on the received search sentence, if a type of the received search sentence is identified as a question type.

Further, the obtaining a question type search sentence inputted by a user through a search box may comprise:
obtaining the question type search sentence inputted by the user by voice through the search box.

Further, the obtaining the question type search sentence inputted by the user by voice through the search box may comprise:
invoking a voice acquisition apparatus to acquire a voice message entered by the user, after detecting an operation by the user triggering a voice acquisition icon in the search box; and serving the voice message as the obtained question type search sentence, if the voice message is identified as a question type voice message.

Further, the outputting the answer through a result display page corresponding to the search box may comprise:
outputting the answer by voice through the result display page corresponding to the search box.

Further, the outputting the answer by voice through the result display page corresponding to the search box may comprise:
invoking a voice play device through the result display page corresponding to the search box, and outputting the answer by voice.

With the above description of the embodiments, it can be known by the skilled person in the art that the present disclosure may be implemented by means of software and necessary and general hardware. Although the embodiments may be implemented by means of only hardware, it is optimal to implement the embodiments by means of the combination of software and hardware. Based on this concept, the technical solutions of the present disclosure or the part of the present disclosure over the prior art may be embodied in the form of a software product. The computer software product may be stored in a computer readable storage medium, such as a floppy disk, a read-only memory (ROM), a random access memory (RAM), a flash memory, a hard disk or an optical disk, and may include some instructions for causing a computer device (a personal computer, a server, a network device or the like) to implement the method of embodiments of the present disclosure.

It should be noted that the units and modules in the embodiments of the apparatus for processing question-and-answer information are partitioned according to function logics, but not limited thereto, as long as the corresponding functions can be achieved. In addition, the specific names of the functional units are merely used to distinguish from each other, but not limit the scope of the present disclosure.

The foregoing is only a description of the preferred embodiments of the present disclosure and the applied technical principles. It should be appreciated by those skilled in the art that the inventive scope of the present disclosure is not limited to the technical solutions formed by the particular combinations of the above technical features. The inventive scope should also cover other technical solutions formed by any combinations of the above technical features or equivalent features thereof without departing from the concept of the invention, such as, technical solutions formed by replacing the features as disclosed in the present disclosure with (but not limited to), technical features with similar functions.

## Claims

1. A method for processing question-and-answer information, comprising:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.

2. The method according to claim 1, wherein the serving the search sentence as a to-be-inquired question to initiate a question-and-answer request to a question-and-answer server comprises:
serving the search sentence as the to-be-inquired question, encapsulating the to-be-inquired question as the question-and-answer request according to a format specified by the question-and-answer server, and adding an address of the question-and-answer server as a destination address of the question-and-answer request; and
initiating the question-and-answer request to the question-and-answer server.

3. The method according to claim 1, wherein the obtaining a question type search sentence inputted by a user through a search box comprises:
receiving the search sentence inputted by the user through the search box; and
confirming a current obtained question type search sentence based on the received search sentence, if a type of the received search sentence is identified as a question type.

4. The method according to claim 1, wherein the obtaining a question type search sentence inputted by a user through a search box comprises:
obtaining the question type search sentence inputted by the user by voice through the search box.

5. The method according to claim 4, wherein the obtaining the question type search sentence inputted by the user by voice through the search box comprises:
invoking a voice acquisition apparatus to acquire a voice message entered by the user, after detecting an operation by the user triggering a voice acquisition icon in the search box; and
serving the voice message as the obtained question type search sentence, if the voice message is identified as a question type voice message.

6. The method according to claim 4, wherein the outputting the answer through a result display page corresponding to the search box comprises:
outputting the answer by voice through the result display page corresponding to the search box.

7. The method according to claim 6, wherein the outputting the answer by voice through the result display page corresponding to the search box comprises:
invoking a voice play device through the result display page corresponding to the search box, and outputting the answer by voice.

8. The method according to any one of claims 1 to 7, wherein the answer is obtained by the question-and-answer server from a terminal corresponding to an expert in a field of the to-be-inquired question.

9. An apparatus for processing question-and-answer information, comprising:
a question obtaining unit, configured to obtain a question type search sentence inputted by a user through a search box applied in a search engine;
a question-and-answer request initiating unit, configured to serve the search sentence obtained by the question type search sentence obtaining unit as a to-be-inquired question to initiate a question-and-answer request to a question-and-answer server;
an answer receiving unit, configured to receive an answer corresponding to the to-be-inquired question and returned by the question-and-answer server; and
an answer outputting unit, configured to output the answer through a result display page corresponding to the search box.

10. The apparatus according to claim 9, wherein the question-and-answer request initiating unit is further configured to:
serve the search sentence as the to-be-inquired question, encapsulate the to-be-inquired question as the question-and-answer request according to a format specified by the question-and-answer server, and add an address of the question-and-answer server as a destination address of the question-and-answer request; and
initiate the question-and-answer request to the question-and-answer server.

11. The apparatus according to claim 9, wherein the question obtaining unit is further configured to:
receive the search sentence inputted by the user through the search box; and
confirm a current obtained question type search sentence based on the received search sentence, if a type of the received search sentence is identified as a question type.

12. The apparatus according to claim 9, wherein the question obtaining unit is further configured to:
obtain the question type search sentence inputted by the user by voice through the search box.

13. The apparatus according to claim 12, wherein the question obtaining unit is further configured to:
invoke a voice acquisition apparatus to acquire a voice message entered by the user, after detecting an operation by the user triggering a voice acquisition icon in the search box; and
serve the voice message as the obtained question type search sentence, if the voice message is identified as a question type voice message.

14. The apparatus according to claim 12, wherein the answer outputting unit is further configured to:
output the answer by voice through the result display page corresponding to the search box.

15. The apparatus according to claim 14, wherein the answer outputting unit is further configured to:
invoke a voice play device through the result display page corresponding to the search box, and output the answer by voice.

16. The apparatus according to any one of claims 9 to 15, wherein the answer is obtained by the question-and-answer server from a terminal corresponding to an expert in a field of the to-be-inquired question.

17. The apparatus according to any one of claims 9 to 15, wherein the apparatus is configured in a search client.

18. A storage medium containing computer executable instructions which, when executed by a computer processor, cause the computer processor to perform a method for processing question-and-answer information, the method comprising:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.

19. A device, comprising:
one or more processors; and
a memory;
wherein one or more programs are stored in the memory and when executed by the one or more processors, the one or more programs cause the processors to perform operations comprising:
obtaining a question type search sentence inputted by a user through a search box applied in a search engine;
serving the search sentence as a to-be-inquired question to initiate a question-and-answer request to a question-and-answer server;
receiving an answer corresponding to the to-be-inquired question and returned by the question-and-answer server; and
outputting the answer through a result display page corresponding to the search box.
